# FASCICULE DE BREVET EUROPEEN

(11) **EP 4 359 278 B1**
(45) Date de publication et mention de la délivrance du brevet: **04.11.2026**
(21) Numéro de dépôt: 22735185.5
(22) Date de dépôt: 27.06.2022
(51) Int. Cl.: B60W 40/068, B60W 50/00, G01C 21/00

(54) **PROCÉDÉ D'OPTIMISATION DU CONTRÔLE DYNAMIQUE DU CHÂSSIS D'UN VÉHICULE**
VERFAHREN ZUR OPTIMIERUNG DER DYNAMISCHEN STEUERUNG EINES FAHRZEUGCHASSIS
METHOD FOR OPTIMISING THE DYNAMIC CONTROL OF A VEHICLE CHASSIS

(30) Priorité: 25.06.2021 FR 2106808
(43) Date de publication de la demande: 01.05.2024
(73) Titulaire: Ampere SAS, 92100 Boulogne-Billancourt (FR)
(72) Inventeur: GELIN, Rodolphe, 78084 Guyancourt CEDEX (FR); GIACCONE, Thierry, 78084 Guyancourt CEDEX (FR); MOUTON, Xavier, 78084 Guyancourt CEDEX (FR)
(74) Mandataire: Renault Group
(86) Numéro de dépôt international: PCT/EP2022/067513
(87) Numéro de publication internationale: WO 2022/269098

(56) Documents cités:
- WO-A1-2010/019045
- DE-A1- 102012 112 724
- DE-A1- 102013 222 634
- DE-A1- 102016 221 932
- US-A1- 2016 264 130
- US-A1- 2019 118 821

## Description

### Domaine technique

La présente invention concerne un procédé d'optimisation du contrôle dynamique du châssis d'un véhicule automobile.

Elle concerne en particulier un procédé d'optimisation du contrôle dynamique d'un châssis basé sur une anticipation du taux de glissement du véhicule sur la route sur laquelle il s'apprête à rouler.

### Techniques antérieures

L'apparition des applications d'électronique embarquées ont permis le développement de systèmes actifs de sécurité en complément de systèmes passifs performants.

A l'origine, ces systèmes actifs de sécurité visaient à assister le conducteur du véhicule dans des situations particulièrement dangereuses, avant de devenir des systèmes d'assistance à la conduite permettant un confort de conduite amélioré, une efficacité énergétique accrue, etc.

Des systèmes autonomes d'aide à la conduite pour lesquels le véhicule doit être capable de gérer les situations critiques tous seuls sont aussi apparus.

Le contrôle dynamique du châssis consiste donc à contrôler à tout instant les systèmes châssis et moteur d'un véhicule de manière à pouvoir répondre aux besoins du conducteur, qu'il soit humain ou autonome. Ainsi, le contrôle dynamique du châssis doit prendre en considération les états et les niveaux de performance des systèmes, ainsi que l'environnement du véhicule. Cet environnement du véhicule désigne aussi bien l'état de la route que les conditions météorologiques ambiantes.

En effet, les commandes envoyées aux systèmes châssis et moteur par exemple à l'attaque d'un virage pourront ne pas être les mêmes sur une route glissante que sur une route adhérente. Par exemple, l'ESP, ou contrôle électronique de trajectoire, intervient lors du roulage sur une route de basse adhérence en complétant l'action du conducteur au volant.

Une donnée essentielle à contrôler pour ces systèmes est le taux de glissement du véhicule. Il est connu de mesurer en temps réel le taux de glissement à chaque roue, dit taux de glissement mobilisé aux roues, par le calcul du rapport entre l'effort vertical et l'effort longitudinal à chaque roue.

Actuellement, le calcul de ce taux de glissement permet, au travers de l'observation de sa linéarité, de déterminer si le pneu fonctionne dans une plage de fonctionnement linéaire et performante.

Il est connu de calculer le taux de glissement s'appliquant au véhicule de manière « réactive », c'est-à-dire que le taux de glissement calculé est déjà appliqué ou en train de s'appliquer au véhicule. Il n'est donc pas possible par les méthodes actuelles d'anticiper le taux de glissement de manière à configurer les paramètres châssis et moteurs avant que ce taux de glissement ne soit appliqué au véhicule. C'est le cas par exemple des documents DE102013222634A et DE102016221932A.

De plus, le taux de glissement n'est pas une information partageable et commune à l'ensemble des véhicules, ce taux de glissement dépendant des paramètres de performances mécaniques du véhicule en question.

Le document WO2010/019045A décrivent une méthode de prédiction et de partage du coefficient de friction qui met en œuvre des dispositifs de mesure spécifiques.

Il existe donc un besoin de définition d'un outil commun à tous les véhicules permettant d'anticiper pour chacun leur taux de glissement, de manière à améliorer leur contrôle dynamique du châssis de façon à rendre celui-ci plus efficace en toute circonstance.

### Exposé de l'invention

L'invention a donc pour objet un procédé d'entraînement d'un algorithme d'estimation automatique de la composante extrinsèque au véhicule du taux de glissement d'une portion de route faisant correspondre à des données d'état relatives à la portion de route fournies en entrée une valeur de composante extrinsèque au véhicule du taux de glissement de la portion de route en sortie, l'entraînement de l'algorithme d'estimation comprenant une phase d'apprentissage sur une base de données d'état de portions de routes associées à des valeurs de composantes extrinsèques au véhicule du taux de glissement de ces portions de route, les données d'état des portions de route collectées étant prélevées par un véhicule ou plusieurs véhicules équipés d'une caméra orientée vers l'avant du véhicule

Avantageusement, les données d'état de portions de route comprennent des images de la portion de route capturées par une caméra placée à l'avant du véhicule et des informations météorologiques et de température au moment de la capture de l'image.

Avantageusement, la composante extrinsèque au véhicule du taux de glissement associée aux données d'état des portions de routes est déduite du taux de glissement associé aux portions de route, le taux de glissement étant mesuré par le véhicule capturant les données d'état ou connu préalablement à la collecte des données d'état par le véhicule.

Avantageusement, la composante extrinsèque au véhicule du taux de glissement associée aux données d'état des portions de routes est déduite du taux de glissement associé aux portions de route et d'une composante intrinsèque au véhicule du taux de glissement, le taux de glissement étant mesuré par le véhicule capturant les données d'état, par l'intermédiaire de la mesure de l'effort vertical d'une part et de l'effort longitudinal d'autre part exercés par le véhicule à la roue au point de contact avec le sol, ou connu préalablement à la collecte des données d'état par le véhicule, la composante intrinsèque au véhicule du taux de glissement étant particulière au véhicule capturant les données d'état.

Dans un autre mode de réalisation, la valeur de composante extrinsèque au véhicule du taux de glissement associée aux données d'état des portions de route est quantifiée par un utilisateur du véhicule lors de la collecte des données d'état des portions de route.

L'invention a également pour objet un procédé de détermination de la composante extrinsèque au véhicule du taux de glissement d'une portion de route située à l'avant d'un véhicule automobile en mouvement vers ladite portion de route, caractérisé en ce qu'il comprend les étapes suivantes :
- Acquisition d'au moins une donnée d'état relative à la portion de route,
- Détermination d'une valeur de composante extrinsèque au véhicule du taux de glissement de ladite portion de route au moyen d'un algorithme d'estimation automatique de la composante extrinsèque au véhicule du taux de glissement d'une portion de route entraîné selon le procédé précédent.

La présente invention repose donc sur la décomposition du taux de glissement du véhicule en, d'une part, une composante extrinsèque au véhicule du taux de glissement et, d'autre part, une composante intrinsèque au véhicule du taux de glissement. La composante extrinsèque au véhicule repose sur des paramètres de l'environnement et donc indépendants du véhicule. Elle est donc partageable et commune à l'ensemble des véhicules. Au contraire, la composante intrinsèque au véhicule repose sur des paramètres particuliers au véhicule, et est donc unique pour chaque véhicule.

Ainsi, la composante extrinsèque au véhicule du taux de glissement est déterminée avant passage du véhicule sur la portion de route à laquelle elle est associée. La composante extrinsèque est commune à tout véhicule, qui peut l'utiliser avec ses paramètres de performance propres pour déterminer le taux de glissement de manière anticipative, avant de passer sur la route, et non plus réactive, par mesure en direct.

Avantageusement, l'au moins une donnée d'état relative à la portion de route comprend une ou des images de la portion de route capturées par une caméra placée à l'avant du véhicule.

La composante extrinsèque au véhicule du taux de glissement est en effet dépendant de l'état de la route.

De préférence, l'au moins une donnée d'état de la portion de route comprend une ou des informations météorologiques et de température.

La composante extrinsèque au véhicule du taux de glissement est en effet dépendant des conditions météorologiques.

Avantageusement, le procédé comprend, à la suite de l'étape de détermination de la valeur de composante extrinsèque au véhicule du taux de glissement, une étape de génération et de mise-à-jour d'une cartographie de qualité d'adhérence d'une route pour un véhicule.

La cartographie permet de stocker, pour une même portion de route, différentes valeurs de composante extrinsèque au véhicule du taux de glissement pour différentes conditions météorologiques et de température données. Elle permet au véhicule d'accéder à une valeur de composante extrinsèque sans devoir répéter les étapes d'acquisition de données d'état et de détermination de la valeur. Il en résulte la possibilité de relaxer les contraintes temps réel de l'algorithme d'estimation, voire un gain de temps, de ressources du système et d'efficacité.

De manière préférentielle, l'étape de génération et de mise-à-jour d'une cartographie de qualité d'adhérence d'une route comprend les étapes suivantes :
- Moyenne de la composante extrinsèque au véhicule du taux de glissement calculée à l'étape de détermination avec des valeurs de composantes extrinsèques au véhicule du taux de glissement déjà stockées dans la cartographie pour la même portion de route et des données météorologiques et de températures similaires,
- Stockage de la valeur moyennée en association avec la portion de route et les données météorologiques actuelles.

Ainsi, les valeurs de composante extrinsèque stockées dans la cartographie sont affinées et la précision de la cartographie est robustifiée.

Avantageusement, le stockage est effectué localement et/ou sur un serveur partagé.

Le serveur partagé permet à un véhicule autre que celui qui a réalisé l'étape de détermination de la composante extrinsèque au véhicule du taux de glissement d'obtenir cette valeur.

Avantageusement, le procédé comprend une attribution d'un score de confiance associé à la valeur stockée dans la cartographie, le score de confiance étant calculé à partir d'un algorithme statistique.

L'invention a également pour objet un procédé d'optimisation du contrôle dynamique du châssis d'un véhicule à partir d'une composante extrinsèque au véhicule du taux de glissement obtenue à partir d'un procédé tel que défini ci-dessus, ce procédé comprenant les étapes suivantes :
- Récupération d'une valeur de composante extrinsèque au véhicule du taux de glissement associée à une portion de route en avant du véhicule
- Détermination d'une prédiction de la valeur du taux de glissement associé à ladite portion de route à partir de la composante extrinsèque au véhicule du taux de glissement récupérée,
- Adaptation des paramètres du châssis du véhicule en fonction de la prédiction.

Ainsi, le véhicule détermine, à partir d'une valeur de composante extrinsèque au véhicule du taux de glissement, une anticipation de la valeur du taux de glissement sur la portion de route sur laquelle il s'apprête à rouler. Ainsi, ses paramètres de châssis peuvent être modifiés en amont de la portion de route afin d'être optimaux au moment d'arriver sur la portion de route, et non de façon réactive après mesures réalisées pendant le roulement sur cette portion de route, ce qui occasionne une perte d'efficacité, surtout à l'approche d'une zone à faible composante extrinsèque.

De préférence, la valeur de la composante extrinsèque au véhicule du taux de glissement récupérée à l'étape de récupération est la valeur calculée à l'étape de détermination d'une valeur de composante extrinsèque au véhicule du taux de glissement, le véhicule dont le châssis est modifié étant le même que celui qui a effectué cette étape.

Ainsi, le véhicule utilise la valeur de composante extrinsèque au taux de glissement qu'il vient de calculer sans passer par la cartographie. Il détermine la valeur pour lui-même et l'utilise en temps réel. Le véhicule est donc autonome pour optimiser ses paramètres châssis de manière anticipative avant de rouler sur la portion de route correspondante, tout en optimisant les ressources de mémoires à bord véhicule, notamment le cache mémorisé correspondant au trajet à venir puisque le véhicule ne stocke alors pas de cartographie embarquée.

Alternativement, la valeur de composante extrinsèque au véhicule du taux de glissement est récupérée dans la cartographie de qualité d'adhérence de la route générée.

Ainsi, le véhicule peut être un véhicule différent de celui ayant effectué les étapes d'acquisition de données d'état, de détermination et de stockage dans la cartographie de la valeur de composante extrinsèque au véhicule du taux de glissement. De cette manière, le véhicule qui récupère la valeur dans la cartographie peut ne pas comprendre les outils nécessaires à ces étapes, telles qu'une caméra ou un ordinateur de bord suffisamment puissant pour réaliser les procédés et les méthodes d'apprentissage automatique.

De préférence, la composante extrinsèque au véhicule du taux de glissement est récupérée à partir de la cartographie de qualité d'adhérence de la route en fonction de données de géolocalisation et de données météorologiques.

Avantageusement, la prédiction de la valeur du taux de glissement associé à la portion de route est fonction de la valeur récupérée de composante extrinsèque au véhicule du taux de glissement et d'une composante intrinsèque au véhicule du taux de glissement, cette contribution intrinsèque étant particulière au véhicule.

De manière préférentielle, la composante intrinsèque au véhicule du taux de glissement est fonction d'un facteur d'usure du châssis du véhicule, et d'un facteur représentatif du potentiel du châssis du véhicule neuf. Font notamment partie du châssis les pneumatiques, dont les caractéristiques telles que le type de pneumatique (largeur, hauteur, type de gomme, etc...), leur usure, leur pression de gonflage et leur température affectent la composante intrinsèque au véhicule du taux de glissement.

Avantageusement, la prédiction de la valeur du taux de glissement associé à la portion de route est déterminée à bord du véhicule.

De préférence, la prédiction de la valeur du taux de glissement associé à la portion de route est déterminée en temps réel.

L'invention a également pour objet un véhicule automobile apte à mettre en œuvre le procédé d'optimisation de contrôle dynamique du châssis décrit précédemment.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
La Figure 1 illustre les étapes d'un procédé de détermination de la composante extrinsèque au véhicule du taux de glissement associé à une portion de route ;
La Figure 2 illustre les sous-étapes de l'étape de génération d'une cartographie de qualité d'adhérence issue du procédé de la Figure 1 ;
La Figure 3 illustre les étapes d'un procédé de d'optimisation du contrôle dynamique du châssis d'un véhicule selon l'invention ;
La Figure 4 représente un premier mode de réalisation de l'invention ;
La Figure 5 représente un deuxième mode de réalisation de l'invention ; et
La Figure 6 représente un troisième mode de réalisation de l'invention.

### Exposé détaillé d'au moins un mode de réalisation

Le principe de l'invention est de décomposer le taux de glissement du véhicule, donnée connue et notée µ, en une composante extrinsèque µₑₓₜ au véhicule du taux de glissement, et une composante intrinsèque µᵢₙₜ au véhicule du taux de glissement.

La composante extrinsèque µₑₓₜ au véhicule du taux de glissement correspond à la qualité d'adhérence de la route, c'est-à-dire l'influence des facteurs extérieurs au véhicule sur le taux de glissement µ du véhicule. La composante extrinsèque µₑₓₜ est le produit de deux facteurs relatifs respectivement à l'état de la route et à des conditions météorologiques et de température. La composante extrinsèque µₑₓₜ est donc totalement indépendante du véhicule, et est la même pour l'ensemble des véhicules parcourant une même route au même moment, ou du moins dans des conditions environnementales similaires.

La composante intrinsèque µᵢₙₜ au véhicule du taux de glissement correspond à l'influence des caractéristiques techniques du véhicule lui-même sur le taux de glissement µ. Il est donc le produit de deux facteurs, d'une part un facteur d'usure du châssis et d'autre part un facteur potentiel du châssis du véhicule neuf, lié aux caractéristiques du châssis du véhicule en sortie d'usine avec pneumatiques neufs. La composante intrinsèque µᵢₙₜ au véhicule est donc propre à chaque véhicule.

Le taux de glissement µ est le produit des deux composantes extrinsèque µₑₓₜ et intrinsèque µᵢₙₜ au véhicule du taux de glissement : $μ = {μ}_{int} \times {μ}_{ext}$

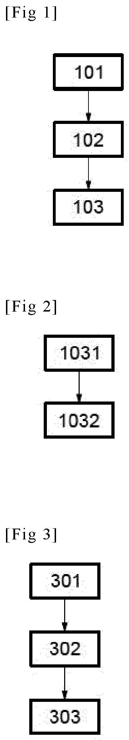

On a représenté sur la figure 1 les étapes d'un procédé de détermination de la composante extrinsèque µₑₓₜ au véhicule du taux de glissement associé à une portion de route. Ce procédé est réalisé par un véhicule s'apprêtant à rouler sur la portion de route.

Ce procédé de détermination de la composante extrinsèque µₑₓₜ au véhicule du taux de glissement associé à une portion de route repose sur un estimateur constitué par un algorithme d'estimation, faisant correspondre à des données d'état d'une portion de route en entrée une valeur de la composante extrinsèque µₑₓₜ au véhicule du taux de glissement pour la portion de route en sortie. Ces données d'état peuvent comprendre une image de la portion de route et des informations météorologiques et de température.

Cet algorithme d'estimation est un algorithme utilisant des techniques d'apprentissage automatique, c'est-à-dire qu'il nécessite, avant d'être fonctionnel, une phase d'apprentissage au cours de laquelle l'algorithme va emmagasiner de nombreuses quantités d'informations afin d'« apprendre » à déterminer une composante extrinsèque µₑₓₜ à partir de n'importe quelles données d'état d'une portion de route en entrée.

La phase d'apprentissage, ou phase d'entraînement, de l'algorithme d'estimation automatique est donc réalisée avant distribution du système aux particuliers, c'est-à-dire avant la mise-en-œuvre d'un procédé de détermination de la composante extrinsèque µₑₓₜ au véhicule du taux de glissement associé à une portion de route tel que décrit sur la figure 1, avant la commercialisation.

La phase d'apprentissage peut se faire d'une première façon par collecte d'images de portions de route et de données météorologiques et de température au moment de la collecte d'images, et mise en relation avec la mesure du taux de glissement effectif µ sur ces portions de route.

La mesure du taux de glissement effectif µ est effectuée par l'intermédiaire de la mesure d'une part de l'effort vertical Fz appliqué par le véhicule à la roue au point de contact avec le sol, et d'autre part de l'effort longitudinal Fx appliqué par le véhicule à la roue au point de contact avec le sol. La mesure est réalisée à l'aide de capteurs équipant le ou les véhicules réalisant la collecte de la phase d'apprentissage.

L'effort vertical Fz est aussi connu comme la masse à chaque roue, et peut être déduit de la masse du véhicule réalisant la phase d'apprentissage et du report de masse sur chaque roue.

L'effort longitudinal Fx peut être déduit des couples de freinage et d'accélération exercés par le châssis ou le groupe motopropulseur.

Le taux de glissement effectif µ est obtenu à partir du rapport entre Fx et Fz.

La phase d'apprentissage peut aussi se faire par collecte d'images de portions de route dont le taux de glissement µ est connu à l'avance par exemple sur des circuits d'essai, ou par collecte d'images de portions de route pour lesquelles des pilotes expérimentés auraient donné leur perception de la qualité d'adhérence de la route, la collecte d'images étant associée à des données météorologiques et de température. Cette phase d'apprentissage peut être réalisée par une flotte de plusieurs véhicules équipés de capteurs permettant de mesurer le taux de glissement µ et dont on connait les performances en sortie d'usine et les usures respectives, ou par un seul de ces véhicules.

De manière générale, la connaissance du véhicule utilisé ou des véhicules utilisés pour effectuer la phase d'apprentissage implique la connaissance de la composante intrinsèque µᵢₙₜ au véhicule du taux de glissement de ces véhicules. En effet, grâce à la connaissance des caractéristiques techniques des véhicules telles que leur usure au moment de la phase d'apprentissage (pneumatique, élasticité, amortissement, cinématique) et leurs performances en sortie d'usine, la composante intrinsèque µᵢₙₜ au véhicule du taux de glissement peut être déduite.

On peut donc, à partir de la connaissance de la composante intrinsèque µᵢₙₜ et du taux de glissement effectif µ , déduire par division la composante extrinsèque µₑₓₜ au véhicule du taux de glissement dans les deux premiers cas : ${μ}_{ext} = \frac{μ}{{μ}_{int}}$

Il est également possible de déduire des ressentis des pilotes expérimentés une valeur quantifiant la composante extrinsèque µₑₓₜ.

Une fois collectées, l'ensemble de ces données d'images de portion de route associées à une valeur de composante extrinsèque µₑₓₜ au véhicule du taux de glissement desdites portion de route et à des données météorologiques et de température est appris par l'algorithme d'estimation. La phase d'apprentissage comprend donc la constitution d'une base de données d'états de portions de route associées à des valeurs de composantes extrinsèques au véhicule du taux de glissement de ces portions de route. Un réseau de neurones de type Réseau de Neurones Récurrents, de type réseau de longue mémoire à court terme LSTM, ou encore de type réseau de neurones récurrents à portes GRU est alors entraîné à partir de la base de données d'état de portions de route collectées associées aux valeurs de composantes extrinsèques µₑₓₜ au véhicule du taux de glissement.

L'estimateur est capable, une fois qu'il a emmagasiné une certaine quantité d'informations, d'être assez précis pour retourner en sortie une valeur fiable de composante extrinsèque µₑₓₜ correspondante à des données d'états données en entrée. Ces données d'état sont une image d'une portion de route et des conditions météorologiques et de température au moment de la capture de l'image. Une fois la phase d'apprentissage terminée, l'estimateur est donc fonctionnel, et peut être embarqué à bord d'un véhicule. Le procédé de détermination selon la figure 1 peut ainsi être mis-en-œuvre.

Dans un autre mode de réalisation, l'estimateur est capable durant la phase d'apprentissage d'apprendre aussi à déterminer les données météorologiques à partir des images de portions de route. Ainsi, l'estimateur fonctionnel, une fois la phase d'apprentissage terminée, est capable de retourner en sortie une valeur fiable de composante extrinsèque µₑₓₜ correspondant à des données d'états données en entrée comprenant uniquement une ou des images d'une portion de route. L'estimateur n'a donc plus besoin des conditions météorologiques en entrée. Néanmoins, ce mode de réalisation est moins précis, car les données d'état fournies en entrée de l'estimateur sont de fait moins complètes.

Ce qui suit décrit les étapes du procédé de la figure 1, qui est un procédé de détermination de la composante extrinsèque µₑₓₜ au véhicule du taux de glissement associé à une portion de route.

A l'étape 101, le véhicule réalise une acquisition de données d'état relatives à la portion de route. Cette acquisition se fait au moyen d'une caméra orientée vers l'avant du véhicule et dont l'objectif est dirigé sur la portion de route sur laquelle le véhicule s'apprête à rouler. La caméra peut par exemple être celle des ADAS, de l'anglais Advanced Driver Assistance System, ou une autre caméra. Cette acquisition concerne aussi des informations météorologiques et de température telles que la pression atmosphérique, l'humidité, la pluviométrie, la mesure du verglas, de la neige, ou tout autre donnée utile, venant par exemple de capteurs embarqués, ou d'un serveur externe au véhicule tel qu'un site internet.

La portion de route est d'une longueur plus ou moins grande, car dépendante de la fréquence d'envoi des images à l'estimateur, cette fréquence étant variable et ajustable en fonction de la précision souhaitée et également de la résolution de la caméra utilisée, qui peut par exemple permettre une qualité suffisante sur une longueur de route de cent mètres. Plus la fréquence d'envoi d'images à l'estimateur sera élevée, plus il sera possible de réduire la longueur considérée de la portion de route.

A l'étape 102, le véhicule détermine la valeur, notée X, de la composante extrinsèque µₑₓₜ au véhicule du taux de glissement associée à la portion de route à partir des données d'état acquises à l'étape 101. Pour cela, les données d'état sont envoyées en entrée de l'estimateur de composante extrinsèque au véhicule du taux de glissement embarqué à bord du véhicule. Cet estimateur fait correspondre aux données d'état en entrée une valeur de la composante extrinsèque µₑₓₜ au véhicule du taux de glissement pour la portion de route en sortie.

A l'étape 103, une cartographie de qualité d'adhérence de la portion de route est générée et/ou mise-à-jour. Les sous-étapes de cette génération et mise-à-jour de la cartographie de qualité d'adhérence sont décrites à la figure 2.

A l'étape 1031, la valeur X de la composante extrinsèque au véhicule du taux de glissement déterminée à l'étape 102 est pondérée avec des valeurs de composante extrinsèques précédemment calculées pour des conditions météorologiques similaires sur la même portion de route et dont la moyenne est stockée dans la cartographie. Par exemple, en notant Yₙ la valeur stockée dans la cartographie, Yₙ étant égale à la moyenne des n valeurs de composantes extrinsèques précédemment calculées pour ladite portion de route et des conditions météorologiques similaires, on peut affecter à la nouvelle valeur moyennée, notée Yₙ₊₁, la valeur : ${Y}_{n + 1} = \frac{\left({Y}_{n}\times n\right) + X}{n + 1}$ La nouvelle valeur moyenne déterminée Yₙ₊₁ lors de cette étape 1031 peut aussi être calculée pour toute formule pondérant le poids de la valeur X déterminée à l'étape 102 avec le poids n du nombre de valeurs précédentes ayant permis de déterminer Yₙ. Cette valeur moyenne pourrait dans d'autre modes de réalisation être déterminée en excluant des n valeurs précédemment calculées utilisées pour déterminer Yₙ les valeurs éloignées de la moyenne, ou en tenant compte de l'écart type ou de la variance de ces valeurs pour ladite portion de route et des conditions météorologiques similaires.

Si aucune valeur précédente n'avait été calculée pour les données de géolocalisation de la portion de route aux conditions météorologiques et de températures de l'acquisition, c'est-à-dire si n a une valeur de zéro, la valeur moyennée prend la valeur X de la composante extrinsèque au véhicule déterminée à l'étape 102. En variante, la valeur moyennée peut aussi prendre la valeur d'une moyenne de données stockées dans la cartographie pour des conditions météorologiques différentes mais voisines. Par exemple, si la cartographie associée aux données de géolocalisation de la portion de route ne comprend aucune valeur pour une température de 0°C sous la neige, mais qu'elle comprend deux valeurs respectivement pour deux températures de -5°C et de 5°C sous la neige, la valeur moyennée pour 0°C peut prendre la moyenne de ces deux valeurs.

Tout autre algorithme de lissage ou de moyenne peut être utilisé pour robustifier la cartographie.

Les classes de conditions météorologiques constituant la cartographie pour une portion de route peuvent par exemple comprendre une classe pour un temps sec, une classe pour du brouillard, une classe pour une pluie faible (< 2 mm/h), une classe pour une pluie modérée (entre 2-7 et 6 mm/h), une classe pour une pluie forte (> 7.6 mm/h), une classe pour de la neige et une classe pour de la glace.

Les classes de données de température constituant la cartographie pour une portion de route peuvent par exemple comprendre une classe pour une température inférieure à -16°C, une classe pour une température comprise entre -16°C et -12°C, une classe pour une température comprise entre -12°C et -10°C, une classe pour une température comprise entre -10°C et -6°C, une classe pour une température comprise entre -6°C et -4°C, une classe pour une température comprise entre -4°C et 0°C, une classe pour une température comprise entre 0°C et 5°C, une classe pour une température comprise entre 5°C et 10°C, une classe pour une température comprise entre 10°C et 20°C, une classe pour une température comprise entre 20°C et 30°C, une classe pour une température comprise entre 30°C et 40°C, une classe pour une température comprise entre 40°C et 50°C, et une classe pour une température supérieure à 50°C.

Ainsi, selon ces classes, pour une portion de route, la cartographie à terme aurait pour chaque valeur de température et pour chaque météo une valeur de composante extrinsèque µₑₓₜ au véhicule du taux de glissement associée à la portion de route.

A l'étape 1032, la valeur moyennée Yₙ₊₁ déterminée à l'étape 1031 est stockée en association aux données de géolocalisation de la portion de route et aux conditions météorologiques et de températures lors de l'acquisition des données d'état de l'étape 101. Ainsi, les valeurs stockées dans la cartographie sont plus précises et robustes au fur et à mesure des roulages sur la portion de route de véhicules effectuant les étapes du procédé de la figure 1. Les composantes extrinsèques au véhicule du taux de glissement étant indépendantes par définition du véhicule, le stockage d'une moyenne de ces composantes extrinsèques est permis tout en respectant les contraintes du type du Règlement Général sur la Protection des Données, ou RGPD.

La cartographie va donc se compléter au fil du temps en associant pour chaque route une table de valeurs de composante extrinsèque µₑₓₜ au véhicule du taux de glissement en fonction des conditions météorologiques et de température.

La cartographie peut être générée sur un serveur partagé entre un ensemble de véhicules capables de l'alimenter en données de composantes extrinsèques µₑₓₜ au véhicule du taux de glissement. Dans le cas d'une cartographie partagée, sa construction se fait plus rapidement, et les valeurs sont plus précises, la quantité d'informations étant logiquement beaucoup plus importante. La cartographie partagée est donc plus robuste.

La cartographie peut aussi être générée localement, c'est-à-dire à bord du véhicule. Elle est alors entièrement construite par ce véhicule et accessible uniquement par lui.

Un même véhicule ayant accès à la cartographie partagée peut, en plus, construire une cartographie locale. Cela permet par exemple au procédé d'optimisation du contrôle dynamique du châssis d'être mis-en-œuvre, même en cas de problème de connexion à la cartographie partagée, ou tout simplement pour limiter les communications vers la cartographie partagée, et ainsi économiser les ressources du véhicule.

Dans le cas où le véhicule ayant accès à la cartographie partagée crée en plus une cartographie locale, il peut simplement se contenter de mémoriser une partie de la cartographie partagée à bord. Il a alors une cartographie locale complète en fonction de ses besoins, identique aux informations qu'il aurait obtenues par une communication avec la cartographie partagée, et ce sans avoir besoin de renouveler la connexion.

Un score de confiance peut aussi être associé dans la cartographie locale ou partagée à chaque valeur moyennée de composante extrinsèque µₑₓₜ au véhicule du taux de glissement stockée. Ce score de confiance, obtenu à partir d'un algorithme statistique sur certains ou l'ensemble des paramètres qui ont permis de construire la cartographie, décrit une indication de la précision de la valeur stockée. Par exemple, le score de confiance peut être obtenu en fonction de l'écart type des valeurs déterminées pour des mêmes conditions, ou simplement du nombre de ces valeurs précédemment déterminées, notée ci-dessus n.

On a représenté sur la figure 3 les étapes d'un procédé d'optimisation du contrôle dynamique d'un véhicule à partir d'une composante extrinsèque µₑₓₜ au véhicule du taux de glissement.

A l'étape 301, le véhicule récupère une valeur de composante extrinsèque µₑₓₜ au véhicule du taux de glissement associée à la portion de route en avant du véhicule.

La valeur de composante extrinsèque µₑₓₜ au véhicule du taux de glissement récupérée peut être soit la valeur stockée dans la cartographie, partagée et/ou locale, associée aux données de localisation de la portion de route et aux conditions météorologiques et de température présentes au moment de l'étape 301, soit la valeur déterminée à l'étape 102.

La valeur récupérée est la valeur déterminée à l'étape 102 lorsque le procédé de la figure 3 est réalisé par le même véhicule que celui qui a réalisé le procédé de détermination de la composante extrinsèque de la figure 1, et que la réalisation des deux procédés des figures 1 et 3 se fait en temps réel et lors du même passage sur la portion de route. Ainsi, seuls les véhicules équipés des outils permettant de réaliser le procédé de la figure 1 sont aptes à récupérer cette valeur, ces outils comprenant notamment une caméra avant disposée de manière à capter les images de la route sur laquelle le véhicule s'apprête à rouler en marche avant, un ordinateur de bord apte à mettre en œuvre l'estimateur et des capteurs de pluie ou tout autre moyen permettant d'obtenir des informations météorologiques, de température et de géolocalisation.

La valeur récupérée est au contraire la valeur stockée dans la cartographie lorsque le procédé de la figure 3 est réalisé soit par un véhicule autre que celui qui a réalisé le procédé de détermination de la figure 1, ce véhicule récupérant la valeur dans la cartographie partagée, soit par le même véhicule que celui qui a réalisé le procédé de détermination de la figure 1, mais qu'il l'a effectué lors d'un précédent passage, et qui s'est par conséquent construit une cartographie locale. Le véhicule réalisant le procédé de la figure 3 récupère au moment de passer sur une portion de route la valeur de composante extrinsèque au véhicule du taux de glissement stockée dans la cartographie pour les données de géolocalisation de cette portion de route et pour les conditions météorologiques et de températures actuelles.

A l'étape 302, le véhicule détermine une prédiction de la valeur du taux de glissement µ associée à la portion de route pour laquelle il vient de récupérer une composante extrinsèque µₑₓₜ au véhicule du taux de glissement. Pour cela, il détermine sa propre composante intrinsèque µᵢₙₜ au véhicule du taux de glissement, par le produit défini plus haut du facteur d'usure du châssis du véhicule et du facteur potentiel du châssis du véhicule neuf. Cette prédiction est réalisée à bord du véhicule destiné à optimiser ses paramètres châssis, et en temps réel, juste avant son passage sur la portion de route concernée. Dans un souci d'économie des ressources, il est aussi possible que la prédiction soit réalisée au début de l'itinéraire puis stockée à bord. Ce dernier cas nécessite une cartographie locale, accompagnée ou non d'un accès à la cartographie partagée, la cartographie locale contenant les valeurs de composante extrinsèque de l'ensemble de l'itinéraire à venir.

A l'étape 303, le véhicule adapte ses paramètres châssis en fonction de la prédiction de l'étape 302, de manière à optimiser ses performances lorsqu'il roulera sur la portion de route.

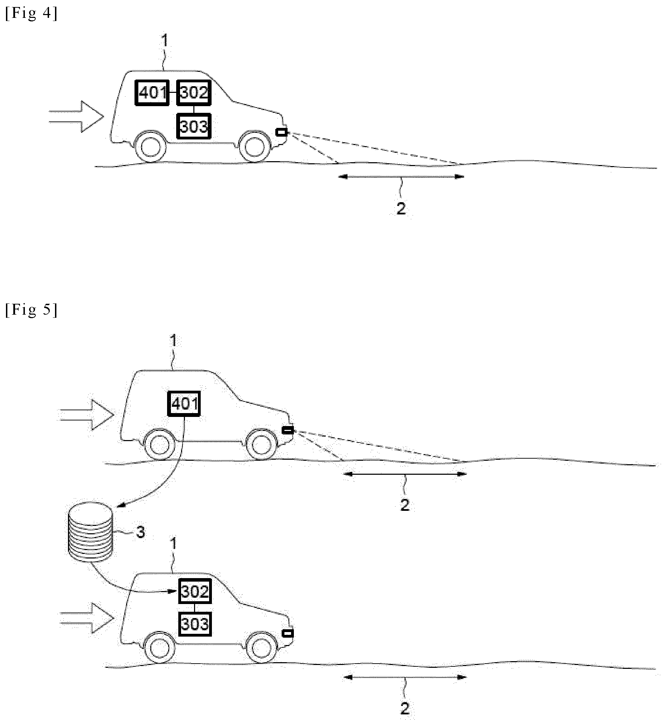

Sur la figure 4, un premier mode de réalisation de l'invention est représenté.

Un véhicule 1 roule en direction d'une portion de route 2, sur lequel il n'a jamais roulé précédemment. Il n'a donc pas pu mesurer le taux de glissement µ associé à cette portion de route 2.

Le véhicule 1 est équipé d'outils permettant de réaliser le procédé décrit sur la figure 1 de détermination d'une composante extrinsèque µₑₓₜ au véhicule du taux de glissement associé à une portion de route. Ces outils sont notamment une caméra avant disposée de manière à capter les images de la route sur laquelle le véhicule s'apprête à rouler en marche avant, un ordinateur de bord apte à mettre en œuvre l'estimateur et des capteurs de pluie ou tout autre moyen permettant d'obtenir des informations météorologiques, de température et de géolocalisation. Dans ce mode de réalisation, le véhicule 1 effectue à bord le procédé de la figure 1 de détermination de la composante extrinsèque µₑₓₜ au véhicule du taux de glissement associée à la portion de route 2, la mise-en-œuvre de ce procédé étant représenté sur la figure 4 par la bulle 401. Le véhicule 1 effectue à bord la prédiction du taux de glissement µ de l'étape 302 et modifie donc ses paramètres châssis selon l'étape 303 en fonction de la prédiction.

Ainsi, dans ce mode de réalisation de la figure 4, l'ensemble des procédés de l'invention est réalisé par le même véhicule 1, à bord et en temps réel lors de son premier passage sur la portion de route 2. Ce premier mode de réalisation présente l'avantage d'être autonome, sans nécessité de communiquer avec le serveur partagé. Néanmoins, l'anticipation du taux de glissement µ est relativement courte, car limitée par les performances de la caméra, notamment sa portée.

La figure 5 décrit un deuxième mode de réalisation de l'invention, dans lequel le véhicule 1 effectue la mise-en-œuvre 401 du procédé de détermination de la composante extrinsèque µₑₓₜ au véhicule du taux de glissement associée à la portion de route 2 lors de son premier passage vers la portion de route 2. Le véhicule 1 stocke alors dans une cartographie locale 3 qu'il a générée à bord la valeur moyennée de la composante extrinsèque déterminée. Lors de son prochain passage à l'approche de la portion de route 2, le véhicule 1 récupère la valeur stockée dans la cartographie locale 3 pour les conditions météorologiques et de température actuelles, et réalise la prédiction de l'étape 302. Le véhicule 1 adapte alors ses paramètres châssis selon l'étape 303.

Ce deuxième mode de réalisation présente l'inconvénient, comparé au premier mode de réalisation, de ne pas agir au premier passage sur la portion de route 2, mais nécessite un ordinateur de bord moins performant. De plus, l'optimisation des paramètres châssis peut être réalisée même lorsque les conditions ne permettent pas à la caméra de capter des images de qualité suffisante à la mise-en-œuvre du procédé de détermination de la figure 1, par exemple lors d'un brouillard épais, de nuit, ou lorsque la caméra est obstruée.

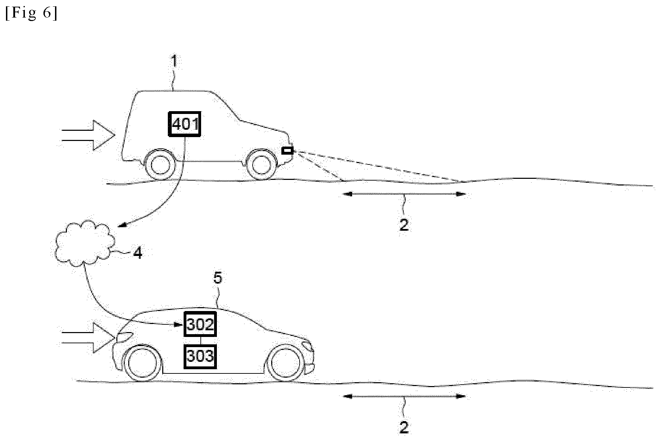

La figure 6 décrit un troisième mode de réalisation de l'invention, dans lequel le véhicule 1 effectue la mise-en-œuvre 401 du procédé de détermination de la composante extrinsèque µₑₓₜ au véhicule du taux de glissement associée à la portion de route 2 lors de son premier passage vers la portion de route 2. Le véhicule 1 envoie alors dans une cartographie partagée 4 les conditions météorologiques et de température actuelles ainsi que la valeur de la composante extrinsèque déterminée, qui est moyennée dans la cartographie partagée 4. Plus tard, un deuxième véhicule 5, qui n'est pas équipé des outils permettant de mettre-en-œuvre le procédé de détermination de la composante extrinsèque µₑₓₜ du taux de glissement, s'apprête à rouler sur la portion de route 2. Le véhicule 5 récupère la valeur stockée dans la cartographie partagée 4 pour les conditions météorologiques et de température actuelles, et réalise la prédiction de l'étape 302. Le véhicule 5 adapte alors ses paramètre châssis selon l'étape 303. Le véhicule 5 peut de même, à l'aide des techniques standards de construction d'un eHorizon, ou horizon électronique, construire une carte locale incluant uniquement les composantes extrinsèques de son itinéraire à venir. Le véhicule 5 a donc accès aux différentes valeurs de composantes extrinsèques du taux de glissement dont il aura besoin avec un temps d'avance relativement long. En effet, le véhicule n'aura à bord reconstruit qu'une partie de la cartographie 4 partagée, cette reconstruction partielle étant basée sur des estimations du trajet possible du véhicule 5 en fonction de plusieurs stratégies possibles. Ces stratégies peuvent être la destination programmée dans le système de navigation du véhicule ou dans le Most Probable Path, ou basées sur les trajets habituels du véhicule 5, ou tout autre stratégie d'anticipation de l'itinéraire d'un véhicule. En enregistrant les informations, par exemple dans un système de cache, le véhicule peut disposer à l'avance de l'ensemble des valeurs de composantes extrinsèques qu'il utilisera au cours de son trajet.

Ce troisième mode de réalisation présente l'avantage de permettre à un grand nombre de véhicules 1 de contribuer à la construction d'une cartographie qui est donc très précise et robuste. C'est ce grand nombre de véhicules contributeurs à la génération de la cartographie qui permet d'utiliser de façon efficiente des algorithmes statistiques de construction d'un score de confiance. Un autre avantage est de permettre à des véhicules 5 n'ayant pas les outils nécessaires à la réalisation du procédé de détermination de la composante extrinsèque µₑₓₜ du taux de glissement de profiter de la cartographie, tels que la caméra orientée vers l'avant du véhicule ou l'estimateur embarqué. Des véhicules connectés de gamme inférieure peuvent donc optimiser leurs paramètres châssis.

Dans un dernier mode de réalisation non représenté sur une figure, un véhicule 1 peut avoir accès à la cartographie partagée. Lors de son premier passage sur la portion de route 2, il peut récupérer dans la cartographie partagée la valeur de composante extrinsèque de la portion de route 2 pour les conditions météorologiques actuelles, puis réaliser la prédiction 302 et l'optimisation 303 en temps réel pour son passage sur la portion de route 2. Parallèlement, il peut réaliser l'étape 401 de mise-en-œuvre du procédé de la figure 1 de détermination de la composante extrinsèque au véhicule du taux de glissement associée à la portion de route 2. Afin d'économiser les ressources, l'étape 401 peut être réalisée une fois que les étapes 302 et 303 sont terminées, sans contrainte de temps sévère, la seule condition étant d'avoir stocké les données d'état relatives à la portion de route 2. Une fois le procédé terminé, la nouvelle valeur de composante extrinsèque au véhicule du taux de glissement déterminée lors de l'étape 401 peut être partagée par le véhicule à la cartographie partagée, et/ou à une cartographie locale. Ainsi, l'inconvénient du deuxième mode de réalisation selon lequel le premier passage ne permet pas d'optimiser les paramètres châssis est évité, le tout sans avoir besoin d'un ordinateur de bord aussi performant que pour le premier mode de réalisation. De plus, la cartographie partagée est mise-à-jour.

## Revendications

1. Procédé d'entraînement d'un algorithme d'estimation automatique de la composante extrinsèque (µₑₓₜ) au véhicule du taux de glissement d'une portion de route faisant correspondre à des données d'état relatives à la portion de route fournies en entrée une valeur de composante extrinsèque (µₑₓₜ) au véhicule du taux de glissement de la portion de route en sortie, l'entraînement de l'algorithme d'estimation comprenant une phase d'apprentissage sur une base de données d'état de portions de routes associées à des valeurs de composantes extrinsèques au véhicule du taux de glissement de ces portions de route, les données d'état des portions de route collectées étant prélevées par un véhicule ou plusieurs véhicules équipés d'une caméra orientée vers l'avant du véhicule.

2. Procédé selon la revendication 1, dans lequel les données d'état de portions de route comprennent des images de la portion de route capturées par une caméra placée à l'avant du véhicule et des informations météorologiques et de température au moment de la capture de l'image.

3. Procédé selon la revendication 1 ou 2, dans lequel la composante extrinsèque (µₑₓₜ) au véhicule du taux de glissement associée aux données d'état des portions de routes est déduite du taux de glissement (µ) associé aux portions de route, le taux de glissement (µ) étant mesuré par le véhicule capturant les données d'état ou connu préalablement à la collecte des données d'état par le véhicule.

4. Procédé de détermination de la composante extrinsèque (µₑₓₜ) au véhicule du taux de glissement d'une portion de route (2) située à l'avant d'un véhicule automobile (1) en mouvement vers ladite portion de route (2), **caractérisé en ce qu'**il comprend les étapes suivantes :
- Acquisition (101) d'au moins une donnée d'état relative à la portion de route (2),
- Détermination (102) d'une valeur (X) de composante extrinsèque au véhicule du taux de glissement de ladite portion de route (2) au moyen d'un algorithme d'estimation automatique de la composante extrinsèque au véhicule du taux de glissement d'une portion de route entraîné selon l'une des revendications 1 à 3.

5. Procédé selon la revendication 4, dans lequel l'au moins une donnée d'état relative à la portion de route comprend une ou des images de la portion de route (2) capturées par une caméra placée à l'avant du véhicule (1).

6. Procédé selon la revendication 4 ou 5, dans lequel l'au moins une donnée d'état de la portion de route (2) comprend une ou des informations météorologiques et de température.

7. Procédé selon l'une quelconque des revendications 4 à 6 comprenant, à la suite de l'étape de détermination (102) de la valeur de composante extrinsèque au véhicule du taux de glissement, une étape (103) de génération et de mise-à-jour d'une cartographie (3 ; 4) de qualité d'adhérence d'une route pour un véhicule.

8. Procédé selon la revendication 7, dans lequel l'étape (103) de génération et de mise-à-jour d'une cartographie (3 ; 4) de qualité d'adhérence d'une route comprend les étapes suivantes :
- Moyenne (1031) de la composante extrinsèque (X) au véhicule du taux de glissement calculée à l'étape (102) de détermination avec des valeurs de composantes extrinsèques (Yₙ) au véhicule du taux de glissement déjà stockées dans la cartographie (3 ; 4) pour la même portion de route (2) et des données météorologiques et de températures similaires,
- Stockage (1032) de la valeur moyennée (Yₙ₊₁) en association avec la portion de route (2) et les données météorologiques actuelles.

9. Procédé selon la revendication 8, dans lequel le stockage (1032) est effectué localement et/ou sur un serveur partagé.

10. Procédé selon l'une des revendications 8 ou 9, comprenant une attribution d'un score de confiance associé à la valeur (Yₙ₊₁) stockée dans la cartographie (3 ; 4), le score de confiance étant calculé à partir d'un algorithme statistique.

11. Procédé d'optimisation du contrôle dynamique du châssis d'un véhicule (1), ce procédé comprenant les étapes suivantes :
- Récupération (301) d'une valeur de composante extrinsèque (µₑₓₜ) au véhicule du taux de glissement associée à une portion de route (2) en avant du véhicule (1), ladite valeur de composante extrinsèque (µₑₓₜ) étant obtenue à partir d'un procédé de détermination de la composante extrinsèque (µₑₓₜ) au véhicule du taux de glissement d'une portion de route (2) située à l'avant d'un véhicule automobile (1) en mouvement vers ladite portion de route (2) selon l'une des revendications 4 à 10,
- Détermination (302) d'une prédiction de la valeur du taux de glissement (µ) associé à ladite portion de route (2) à partir de la composante extrinsèque (µₑₓₜ) au véhicule du taux de glissement récupérée,
- Adaptation (303) des paramètres du châssis du véhicule (1) en fonction de la prédiction.

12. Procédé selon la revendication 11, dans lequel la valeur de la composante extrinsèque (µₑₓₜ) au véhicule du taux de glissement récupérée à l'étape (301) de récupération est la valeur (X) calculée à l'étape (102) de détermination d'une valeur de composante extrinsèque au véhicule du taux de glissement, le véhicule (1) dont le châssis est modifié étant le même que celui qui a effectué cette étape.

13. Procédé selon la revendication 11, dans lequel la composante extrinsèque (µₑₓₜ) au véhicule du taux de glissement est récupérée à partir de la cartographie (3 ; 4) de qualité d'adhérence de la route en fonction de données de géolocalisation et de données météorologiques.

14. Procédé selon l'une quelconque des revendications 11 à 13, dans lequel la prédiction de la valeur du taux de glissement (µ) associé à la portion de route (2) est fonction de la valeur récupérée de composante extrinsèque (µₑₓₜ) au véhicule du taux de glissement et d'une composante intrinsèque (µᵢₙₜ) au véhicule du taux de glissement, cette contribution intrinsèque (µᵢₙₜ) étant particulière au véhicule (1 ; 5).

15. Procédé selon la revendication 14, dans lequel la composante intrinsèque (µᵢₙₜ) au véhicule du taux de glissement est fonction d'un facteur d'usure du châssis du véhicule (1 ; 5), et d'un facteur représentatif du potentiel du châssis du véhicule (1 ; 5) neuf.

16. Procédé selon l'une quelconque des revendications 11 à 15, dans lequel la prédiction de la valeur du taux de glissement (µ) associé à la portion de route (2) est déterminée à bord du véhicule (1 ; 5).

17. Procédé selon l'une quelconque des revendications 11 à 16, dans lequel la prédiction de la valeur du taux de glissement (µ) associé à la portion de route (2) est déterminée en temps réel.

18. Véhicule automobile (1 ; 5) configuré pour mettre en œuvre le procédé d'optimisation de contrôle dynamique du châssis décrit dans l'une quelconque des revendications 11 à 17.

## Patentansprüche

1. Verfahren zum Trainieren eines Algorithmus zur automatischen Schätzung der fahrzeugextrinsischen Komponente (µₑₓₜ) der Schlupfrate eines Straßenabschnitts, indem eine Entsprechung zwischen Zustandsdaten bezüglich des Straßenabschnitts, die im Eingang bereitgestellt werden, und einem Wert einer fahrzeugextrinsischen Komponente (µₑₓₜ) der Schlupfrate des Straßenabschnitts im Ausgang hergestellt wird, wobei das Trainieren des Algorithmus zur Schätzung eine Lernphase auf einer Basis von Zustandsdaten von Straßenabschnitten umfasst, die Werten von fahrzeugextrinsischen Komponenten der Schlupfrate dieser Straßenabschnitte zugeordnet sind, wobei die gesammelten Zustandsdaten der Straßenabschnitte von einem Fahrzeug oder mehreren Fahrzeugen abgegriffen werden, die mit einer zur Vorderseite des Fahrzeugs gerichteten Kamera ausgestattet sind.

2. Verfahren nach Anspruch 1, wobei die Zustandsdaten von Straßenabschnitten Bilder des Straßenabschnitts, die von einer an der Vorderseite des Fahrzeugs angeordneten Kamera erfasst werden, sowie Wetter- und Temperaturinformationen zum Zeitpunkt der Erfassung des Bildes umfassen.

3. Verfahren nach Anspruch 1 oder 2, wobei die fahrzeugextrinsische Komponente (µₑₓₜ) der Schlupfrate, die den Zustandsdaten der Straßenabschnitte zugeordnet ist, aus der den Straßenabschnitten zugeordneten Schlupfrate (µ) abgeleitet wird, wobei die Schlupfrate (µ) durch das Fahrzeug gemessen wird, das die Zustandsdaten erfasst, oder vor dem Sammeln der Zustandsdaten durch das Fahrzeug bekannt ist.

4. Verfahren zur Bestimmung der fahrzeugextrinsischen Komponente (µₑₓₜ) der Schlupfrate eines Straßenabschnitts (2), der vor einem Kraftfahrzeug (1) gelegen ist, das sich auf den Straßenabschnitt (2) zubewegt, **dadurch gekennzeichnet, dass** es die folgenden Schritte umfasst:
- Beschaffen (101) mindestens eines Zustandsdatums bezüglich des Straßenabschnitts (2),
- Bestimmen (102) eines Wertes (X) einer fahrzeugextrinsischen Komponente der Schlupfrate des Straßenabschnitts (2) mittels eines Algorithmus zur automatischen Schätzung der fahrzeugextrinsischen Komponente der Schlupfrate eines Straßenabschnitts, der nach einem der Ansprüche 1 bis 3 trainiert wurde.

5. Verfahren nach Anspruch 4, wobei das mindestens eine Zustandsdatum bezüglich des Straßenabschnitts ein oder mehrere Bilder des Straßenabschnitts (2) umfasst, die von einer an der Vorderseite des Fahrzeugs (1) angeordneten Kamera erfasst werden.

6. Verfahren nach Anspruch 4 oder 5, wobei das mindestens eine Zustandsdatum des Straßenabschnitts (2) eine oder mehrere Wetter- und Temperaturinformationen umfasst.

7. Verfahren nach einem der Ansprüche 4 bis 6, umfassend, nach dem Schritt (102) des Bestimmens des Werts einer fahrzeugextrinsischen Komponente der Schlupfrate, einen Schritt (103) des Erzeugens und Aktualisierens einer Karte (3; 4) mit der Kraftschlussqualität einer Straße für ein Fahrzeug.

8. Verfahren nach Anspruch 7, wobei der Schritt (103) des Erzeugens und Aktualisierens einer Karte (3; 4) mit der Kraftschlussqualität einer Straße die folgenden Schritte umfasst:
- Mitteln (1031) der im Schritt (102) des Bestimmens berechneten fahrzeugextrinsischen Komponente (X) der Schlupfrate mit Werten von fahrzeugextrinsischen Komponenten (Yₙ) der Schlupfrate, die in der Karte (3; 4) für denselben Straßenabschnitt (2) und ähnliche Wetter- und Temperaturdaten bereits gespeichert sind,
- Speichern (1032) des gemittelten Werts (Yₙ₊₁) unter Zuordnung zu dem Straßenabschnitt (2) und den aktuellen Wetterdaten.

9. Verfahren nach Anspruch 8, wobei das Speichern (1032) lokal und/oder auf einem gemeinsam genutzten Server durchgeführt wird.

10. Verfahren nach einem der Ansprüche 8 oder 9, umfassend eine Zuweisung eines Konfidenzscores, der dem in der Karte (3; 4) gespeicherten Wert (Yₙ₊₁) zugeordnet ist, wobei der Konfidenzscore ausgehend von einem statistischen Algorithmus berechnet wird.

11. Verfahren zur Optimierung der dynamischen Steuerung des Chassis eines Fahrzeugs (1), wobei dieses Verfahren die folgenden Schritte umfasst:
- Abrufen (301) eines Werts einer fahrzeugextrinsischen Komponente (µₑₓt) der Schlupfrate, die einem Straßenabschnitt (2) vor dem Fahrzeug (1) zugeordnet ist, wobei der Wert der extrinsischen Komponente (µₑₓt) ausgehend von einem Verfahren zur Bestimmung der fahrzeugextrinsischen Komponente (µₑₓₜ) der Schlupfrate eines Straßenabschnitts (2), der vor einem Kraftfahrzeug (1) gelegen ist, das sich auf den Straßenabschnitt (2) zubewegt, nach einem der Ansprüche 4 bis 10 erhalten wird,
- Bestimmen (302) einer Vorhersage des Werts der Schlupfrate (µ), die dem Straßenabschnitt (2) zugeordnet ist, ausgehend von der abgerufenen fahrzeugextrinsischen Komponente (µₑₓₜ) der Schlupfrate,
- Anpassen (303) der Parameter des Chassis des Fahrzeugs (1) in Abhängigkeit von der Vorhersage.

12. Verfahren nach Anspruch 11, wobei der im Schritt (301) des Abrufens abgerufene Wert der fahrzeugextrinsischen Komponente (µₑₓₜ) der Schlupfrate der im Schritt (102) des Bestimmens eines Werts einer fahrzeugextrinsischen Komponente der Schlupfrate ist, wobei das Fahrzeug (1), dessen Chassis geändert wird, dasselbe ist wie dasjenige, das diesen Schritt durchgeführt hat.

13. Verfahren nach Anspruch 11, wobei die fahrzeugextrinsische Komponente (µₑₓₜ) der Schlupfrate ausgehend von der Karte (3; 4) mit der Kraftschlussqualität der Straße in Abhängigkeit von Geolokalisierungsdaten und Wetterdaten abgerufen wird.

14. Verfahren nach einem der Ansprüche 11 bis 13, wobei die Vorhersage des Werts der dem Straßenabschnitt (2) zugeordneten Schlupfrate (µ) von dem abgerufenen Wert der fahrzeugextrinsischen Komponente (µₑₓₜ) der Schlupfrate und von einer fahrzeugintrinsischen Komponente (µᵢₙₜ) der Schlupfrate abhängig ist, wobei dieser intrinsische Beitrag (µᵢₙₜ) spezifisch für das Fahrzeug (1; 5) ist.

15. Verfahren nach Anspruch 14, wobei die fahrzeugintrinsische Komponente (µᵢₙₜ) der Schlupfrate von einem Verschleißfaktor des Chassis des Fahrzeugs (1; 5) und von einem für das Potential des Chassis des neuen Fahrzeugs (1; 5) repräsentativen Faktor abhängig ist.

16. Verfahren nach einem der Ansprüche 11 bis 15, wobei die Vorhersage des Werts der dem Straßenabschnitt (2) zugeordneten Schlupfrate (µ) an Bord des Fahrzeugs (1; 5) bestimmt wird.

17. Verfahren nach einem der Ansprüche 11 bis 16, wobei die Vorhersage des Werts der dem Straßenabschnitt (2) zugeordneten Schlupfrate (µ) in Echtzeit bestimmt wird.

18. Kraftfahrzeug (1; 5), das dazu ausgelegt ist, das in einem der Ansprüche 11 bis 17 beschriebene Verfahren zur Optimierung der dynamischen Steuerung des Chassis durchzuführen.

## Claims

1. Method for training an algorithm for automatically estimating the component (µₑₓₜ) extrinsic to the vehicle of the coefficient of friction of a road segment that matches, to state data relating to the road segment provided by way of input, an output value of the component (µₑₓₜ) extrinsic to the vehicle of the coefficient of friction of the road segment, training of the estimating algorithm comprising a phase of learning from a database of data on the state of road segments associated with values of components extrinsic to the vehicle of the coefficient of friction of these road segments, the collected data on the state of the road segments being collected by one or more vehicles equipped with a camera oriented towards the front of the vehicle.

2. Method according to Claim 1, wherein the data on the state of road segments comprise images of the road segment captured by a camera placed at the front of the vehicle and information on the weather and temperature at the time of capture of the image.

3. Method according to Claim 1 or 2, wherein the component (µₑₓₜ) extrinsic to the vehicle of the coefficient of friction associated with the data on the state of the road segments is deduced from the coefficient of friction (µ) associated with the road segments, the coefficient of friction (µ) being measured by the vehicle capturing the state data or being known prior to the collection of the state data by the vehicle.

4. Method for determining the component (µₑₓₜ) extrinsic to the vehicle of the coefficient of friction of a road segment (2) located in front of a motor vehicle (1) moving towards said road segment (2), **characterized in that** it comprises the following steps:
- acquiring (101) at least one state datum relating to the road segment (2),
- determining (102) a value (X) of the component extrinsic to the vehicle of the coefficient of friction of said road segment (2) by means of an algorithm for automatically estimating the component extrinsic to the vehicle of the coefficient of friction of a road segment trained according to one of Claims 1 to 3.

5. Method according to Claim 4, wherein the at least one state datum relating to the road segment comprises one or more images of the road segment (2) captured by a camera placed at the front of the vehicle (1).

6. Method according to Claim 4 or 5, wherein the at least one state datum of the road segment (2) comprises one or more pieces of weather and temperature information.

7. Method according to any one of Claims 4 to 6 comprising, following the step (102) of determining the value of the component extrinsic to the vehicle of the coefficient of friction, a step (103) of generating and updating a map (3; 4) of vehicle-road grip quality.

8. Method according to Claim 7, wherein the step (103) of generating and updating a road grip-quality map (3; 4) comprises the following steps:
- averaging (1031) the component (X) extrinsic to the vehicle of the coefficient of friction calculated in the determining step (102) with values of components (Yₙ) extrinsic to the vehicle of the coefficient of friction already stored in the map (3; 4) for the same road segment (2) and similar weather and temperature data,
- storing (1032) the averaged value (Yₙ₊₁) in association with the road segment (2) and the current meteorological data.

9. Method according to Claim 8, wherein the storage (1032) is local and/or on a shared server.

10. Method according to either of Claims 8 and 9, comprising assigning a confidence score associated with the value (Yₙ₊₁) stored in the map (3; 4), the confidence score being calculated using a statistical algorithm.

11. Method for optimizing dynamic control of the chassis of a vehicle (1), this method comprising the following steps:
- retrieving (301) a value of the component (µₑₓₜ) extrinsic to the vehicle of the coefficient of friction associated with a road segment (2) in front of the vehicle (1), said value of the extrinsic component (µₑₓₜ) being obtained using a method for determining the component (µₑₓₜ) extrinsic to the vehicle of the coefficient of friction of a road segment (2) located in front of a motor vehicle (1) moving towards said road segment (2) according to one of Claims 4 to 10,
- determining (302) a prediction of the value of the coefficient of friction (µ) associated with said road segment (2) on the basis of the retrieved component (µₑₓₜ) extrinsic to the vehicle of the coefficient of friction,
- configuring (303) the parameters of the chassis of the vehicle (1) depending on the prediction.

12. Method according to Claim 11, wherein the value of the component (µₑₓₜ) extrinsic to the vehicle of the coefficient of friction retrieved in the retrieving step (301) is the value (X) calculated in the step (102) of determining a value of the component extrinsic to the vehicle of the coefficient of friction, the vehicle (1) the chassis of which is modified being the same as the one that performed this step.

13. Method according to Claim 11, wherein the component (µₑₓₜ) extrinsic to the vehicle of the coefficient of friction is retrieved from the road grip-quality map (3; 4) depending on geolocation data and meteorological data.

14. Method according to any one of Claims 11 to 13, wherein the prediction of the value of the coefficient of friction (µ) associated with the road segment (2) is dependent on the retrieved value of the component (µₑₓₜ) extrinsic to the vehicle of the coefficient of friction and on a component (µᵢₙₜ) intrinsic to the vehicle of the coefficient of friction, this intrinsic contribution (µᵢₙₜ) being specific to the vehicle (1; 5).

15. Method according to Claim 14, wherein the component (µᵢₙₜ) intrinsic to the vehicle of the coefficient of friction is dependent on a wear factor of the chassis of the vehicle (1; 5), and on a factor representative of the potential of the chassis of the new vehicle (1; 5).

16. Method according to any one of Claims 11 to 15, wherein the prediction of the value of the coefficient of friction (µ) associated with the road segment (2) is determined on board the vehicle (1; 5).

17. Method according to any one of Claims 11 to 16, wherein the prediction of the value of the coefficient of friction (µ) associated with the road segment (2) is determined in real time.

18. Motor vehicle (1; 5) configured to implement the method for optimizing dynamic control of the chassis described in any one of Claims 11 to 17.
